# EUROPÄISCHE PATENTSCHRIFT

(11) **EP 2 625 058 B1**
(45) Veröffentlichungstag und Bekanntmachung des Hinweises auf die Patenterteilung: **09.11.2016**
(21) Anmeldenummer: 11776129.6
(22) Anmeldetag: 28.09.2011
(51) Int. Cl.: B60L 5/20

(54) **SCHLEIFSTÜCK FÜR EINE GLEITKONTAKTEINRICHTUNG**
CURRENT COLLECTOR STRIP FOR A SLIDING CONTACT DEVICE
FROTTEUR POUR DISPOSITIF DE CONTACT GLISSANT

(30) Priorität: 06.10.2010 DE 102010042027
(43) Veröffentlichungstag der Anmeldung: 14.08.2013
(73) Patentinhaber: Schunk Hoffmann Carbon Technology AG, 4822 Bad Goisern (AT)
(72) Erfinder: REISER, Klaus, A-4820 Bad Ischl (AT); ANGERER, Johann, A-4822 Bad Goisern am Hallstättersee (AT); GANZEL, Martin, A-4820 Bad Ischl (AT)
(74) Vertreter: advotec.
(86) Internationale Anmeldenummer: PCT/EP2011/066904
(87) Internationale Veröffentlichungsnummer: WO 2012/045633

(56) Entgegenhaltungen:
- DE-A1- 4 326 614
- DE-A1- 4 441 339
- DE-U1- 9 316 425
- FR-A- 1 110 518
- GB-A- 148 529

## Beschreibung

Die vorliegende Erfindung betrifft ein Schleifstück für eine mit Vorspannung gegen einen Fahrdraht anliegende Gleitkontakteinrichtung, insbesondere zur Stromversorgung von Schienenfahrzeugen, mit einer auf einem Schleifleistenträger angeordneten Schleifleiste, die einen Kohlenstoff-Formkörper und zumindest eine in dem Kohlenstoff-Formkörper angeordnete, metallische Leiteinrichtung zur Ausbildung einer lokal erhöhten Leitfähigkeit aufweist, wobei die Leiteinrichtung als zumindest eine sich in einer Ebene quer zu einer Gleitrichtung und in Richtung einer Vorspannkraft erstreckende scheibenförmige Leiteinrichtung ausgebildet ist.

Zur Stromversorgung von schienengebundenen, mit Elektromotoren betriebenen Fahrzeugen, werden Gleitkontakteinrichtungen verwendet, die fachterminologisch auch als "Panthographen" bezeichnet werden und mit einer Schleifleiste versehen sind, die als Verschleißteil vermittels einer von dem "Panthographen erzeugten Vorspannkraft gegen einen Fahrstromleiter (Fahrdraht) gedrückt werden und durch Ausbildung eines Gleitkontakts eine Stromzuführung während der Fahrt des Fahrzeuges ermöglichen.

Um auch während des dynamischen Fahrbetriebs von derartigen schienengebundenen Fahrzeugen eine möglichst kontinuierliche Aufrechterhaltung des Gleitkontakts zwischen der Schleifleiste und dem Fahrdraht zu ermöglichen, ist es bekanntermaßen von Vorteil, die Massenträgheitskräfte des Panthographen, die wesentlich durch die Masse des Schleifstücks mitbestimmt werden, möglichst gering zu halten. Gleichzeitig ist es für einen effektiven Betrieb der mit Elektromotoren betriebenen Fahrzeuge notwendig, für eine ausreichende elektrische Leitfähigkeit bzw. einen niedrigen elektrischen Widerstrand der Schleifleiste zu sorgen. Aus diesem Grund hat sich eine Metallimprägnierung des porösen Kohlenstoffs als nicht befriedigend erwiesen, da eine hierdurch erzielte gute elektrische Leitfähigkeit einhergeht mit einer an sich nicht erwünschten Erhöhung der Maße der Schleifleiste aufgrund des durch die Imprägnierung ausgebildeten Metallanteils in der Schleifleiste.

Aus der FR 1 110 518 A ist eine aus zwei unabhängig voneinander ausgebildeten Kohlenstoff-Formkörpern und einer sich quer zu einer Gleitrichtung und in Richtung einer Vorspannkraft erstreckenden, scheibenförmigen Leiteinrichtung zusammengesetzte Schleifleiste bekannt, wobei die vorgenannten Kohlenstoff-Formkörper und die zwischen diesen sandwichartig aufgenommene Leiteinrichtung in einem zangenartig aus zwei Hälften zusammengesetzten Schleifleistenträger unter Vorspannung aufgenommen sind. Sie reflektiert den Oberbegriff des Anspruchs 1.

DE 44 41 339 A1 zeigt ein Schleifstück, das eine aus mehreren Kohlenstoff-Formkörpern zusammengesetzte Schleifleiste aufweist, die in einem zwischen den Kohlenstoff-Formkörpern ausgebildeten Zwischenraum sandwichartig einen Metallgusskörper aufnimmt, der als Leiteinrichtung dient und gleichzeitig zum Zwecke der Ausbildung einer "trägerlosen Schleifleiste" die Funktion eines Schleifleistenträgers erfüllen soll.

Ausgehend von diesem Stand der Technik wurde daher bereits in der EP 1 491 385 A1 vorgeschlagen, Maßnahmen zu ergreifen, die bei einer möglichst niedrigen Dichte, also einer entsprechend geringen Masse der Schleifleiste, die gleichzeitige Ausbildung eines niedrigen spezifischen elektrischen Widerstands der Schleifleiste, also einer guten elektrischen Leitfähigkeit, ermöglicht.

Als Lösung hierzu wird in der EP 1 491 385 A1 vorgeschlagen, Schleifleisten basierend auf einem Materialverbund herzustellen, der einen Lagenaufbau aus Kohlenstofflagen aufweist, zwischen denen jeweils metallische Gittergewebe angeordnet sind, die sich in einer Ebene quer zur Gleitrichtung der Schleifleiste und in Richtung der durch die Gleitkontakteinrichtung auf die Schleifleiste wirkenden Vorspannkraft erstrecken.

Aufgrund des vorstehend wiedergegebenen Lagenaufbaus der bekannten Schleifleiste erweist sich deren Herstellung als relativ aufwendig, da zunächst einzelne Kohlenstoff-Lagen hergestellt werden müssen, dann der vorstehend wiedergegebene Lagenaufbau durch Anordnung der Gittergewebe zwischen den einzelnen Kohlenstofflagen hergestellt und erst anschließend ein Verbundkörper oder Kohlenstoff-Formkörper hergestellt werden kann, der in seiner Gesamtheit die Schleifleiste ausbildet.

Der vorliegenden Erfindung liegt daher die Aufgabe zugrunde, eine Schleifleiste sowie ein Verfahren zur Herstellung einer Schleifleiste vorzuschlagen, die bzw. das eine vereinfachte Herstellung einer Schleifleiste ermöglicht.

Zur Lösung dieser Aufgabe weist das erfindungsgemäße Schleifstück die Merkmale des Anspruchs 1 auf.

Bei dem erfindungsgemäßen Schleifstück ist die Leiteinrichtung mit dem Schleifleistenträger derart verbunden, dass sie zur abscherfesten Anordnung des einstückig ausgeführten Kohlenstoff-Formkörpers auf dem Schleifleistenträger dient und sich in einem in dem einstückig ausgebildeten Kohlenstoff-Formkörper ausgebildeten Schlitz bis zu einer Kontaktfläche der Schleifleiste erstreckt.

Aufgrund der erfindungsgemäßen Ausgestaltung des Schleifstücks ist es möglich, die Schleifleiste basierend auf einem einstückig ausgebildeten Kohlenstoff-Formkörper herzustellen, in dem eine unabhängig vom Kohlenstoff-Formkörper ausgebildete Leiteinrichtung vorgesehen ist, die scheibenförmig ausgebildet ist und sich ausgehend von dem Schleifleistenträger in einem Schlitz des Kohlenstoff-Formkörpers erstreckt. Aufgrund des Verbunds der scheibenförmigen Leiteinrichtung mit dem Schleifleistenträger kann der Kohlenstoff-Formkörper unabhängig von der Leiteinrichtung als monolithischer Körper hergestellt werden. Die Ausbildung des Schleifstücks erfolgt auf einfacher Art und Weise durch Einsetzen der scheibenförmigen Leiteinrichtung in den dafür im Kohlenstoff-Formkörper vorgesehenen Schlitz.

Auf dieser Art und Weise ermöglicht die scheibenförmige Leiteinrichtung nicht nur die gewünschte lokal erhöhte elektrische Leitfähigkeit im Kohlenstoff-Formkörper, sondern dient auch gleichzeitig zur abscherfesten Anordnung des Kohlenstoff-Formkörpers auf dem Schleifleistenträger.

Im Unterschied zu dem aus dem Stand der Technik bekannten Schleifstück kann somit eine Schleifleiste verwendet werden, die ohne die Erzeugung eines Lagenverbunds herstellbar ist. Vielmehr erfolgt die räumlich definierte Anordnung der Leiteinrichtung allein durch die vorbeschriebene Anordnung der scheibenförmigen Leiteinrichtung in den zumindest einen Schlitz des Kohlenstoff-Formkörpers.

Besonders vorteilhaft ist es, wenn die Leiteinrichtung als ein mit dem Schleifleistenträger kombinierbares Bauteil ausgebildet ist, das einen Verbindungsteil zur Verbindung mit dem Schleifleistenträger und einen Scheibenteil zur Aufnahme in dem im Kohlenstoff-Formkörper ausgebildeten Schlitz aufweist. Hierdurch ist es möglich, die Leiteinrichtung sowohl unabhängig vom Kohlenstoff-Formkörper als auch unabhängig vom Schleifleistenträger auszubilden, um somit beispielsweise einheitlich ausgebildete Schleifleistenträger durch Kombination mit unterschiedlich ausgebildeten Leiteinrichtungen und Kohlenstoff-Formkörpern zur Herstellung unterschiedlicher Schleifstücke verwenden zu können. Somit kann also beispielsweise ein standardisiert ausgebildeter Schleifleistenträger als Plattform für unterschiedlich ausgebildete Schleifstücke verwendet werden.

Wenn gemäß einer bevorzugten Ausführungsform der Verbindungsteil einen parallel zu einer Unterseite des Schleifleistenträgers verlaufenden und gegen die Unterseite anliegenden Montageanschlag aufweist, und sich der daran anschließende Scheibenteil durch einen Aufnahmeschlitz im Schleifleistenträger in den im Kohlenstoff-Formkörper ausgebildeten Schlitz hinein erstreckt, ist auf einfacher Art und Weise der Scheibenteil in seiner Relativanordnung gegenüber dem Schleifleistenträger exakt definiert. Darüber hinaus bietet der gegen die Unterseite anliegende Montageanschlag gleichzeitig die Möglichkeit, den Montageanschlag zur Befestigung des Scheibenteils an dem Schleifleistenträger zu verwenden, ohne dass hierdurch die Geometrie bzw. der Querschnitt des Scheibenteils beeinflusst würde. Damit wird es möglich, den Scheibenteil in seiner Geometrie exakt korrespondierend mit dem Schlitz auszubilden, ohne eine Beeinträchtigung dieser Geometrie durch die Art der Befestigung. Somit ist es möglich, die elektrischen Leiteigenschaften bzw. den elektrischen Widerstand des Scheibenteils über seine gesamte Höhe bzw. über die gesamte Höhe des Kohlenstoff-Formkörpers konstant zu definieren.

Wenn der Verbindungsteil der Leiteinrichtung darüber hinaus einen parallel zum Scheibenteil angeordneten und durch den Montageanschlag vom Scheibenteil beabstandeten Eingriffsteil zum verriegelnden Eingriff in einen auf der Unterseite des Schleifleistenträgers ausgebildeten Riegelschlitz aufweist, ist eine besonders exakte und Fehlpositionierungen vermeidende Relativanordnung der Leiteinrichtung gegenüber dem Schleifleistenträger gewährleistet.

Vorteilhaft erfolgt zur Verbindung der Leiteinrichtung mit dem Schleifleistenträger eine unmittelbare Verbindung des Montageanschlags mit dem Schleifleistenträger, beispielsweise mittels einer Schweiß- oder Lötverbindung.

Als besonders vorteilhaft hinsichtlich der einerseits gewünschten mechanischen Eigenschaften des Schleifstücks und andererseits hinsichtlich der gewünschten guten elektrischen Leiteigenschaften erweist es sich, wenn die Leiteinrichtung und der Schleifleistenträger aus unterschiedlichen Materialien gebildet sind. Dabei besteht eine besonders vorteilhafte Möglichkeit darin, die Leiteinrichtung aus Kupferblech auszubilden.

Zur Erzielung einer gleichmäßig verteilten Anordnung einer Mehrzahl von Leiteinrichtungen im Kohlenstoff-Formkörper erweist es sich als vorteilhaft, wenn die Leiteinrichtungen entlang der Längsachse des Schleifleistenträgers in parallelen Reihen angeordnet sind, wobei jeweils die Scheibenteile von zwei aufeinanderfolgenden Leiteinrichtungen auf unterschiedlichen Seiten der Längsachse des Schleifleistenträgers angeordnet sind.

Alternativ zu der bereits vorstehend erläuternden Ausführungsform des Schleifstücks mit einer unabhängig vom Schleifleistenträger ausgebildeten Leiteinrichtung besteht auch die vorteilhafte Möglichkeit, die Leiteinrichtung einstückig zusammenhängend am Schleifleistenträger auszubilden, so dass der Schleifleistenträger zusammen mit der Leiteinrichtung in einem gemeinsamen Herstellungsvorgang herstellbar ist.

Eine besonders vorteilhafte Möglichkeit der gemeinsamen Herstellung der Leiteinrichtung und des Schleifleistenträgers in einem Verbund ergibt sich, wenn die Leiteinrichtung durch zumindest einen Profilsteg eines Trägerprofils des Schleifleistenträgers gebildet ist, so dass beispielsweise die Leiteinrichtung einstückig zusammenhängend mit dem Schleifleistenträger in einem Stranggießverfahren herstellbar ist.

Zur Herstellung einer gleichmäßig verteilten Anordnung einer Mehrzahl von Leiteinrichtungen am Schleifleistenträger erweist es sich als vorteilhaft, wenn der Schleifleistenträger eine Reihenanordnung von Leiteinrichtungen mit mehreren in zumindest zwei parallelen Reihen angeordneten Leiteinrichtungen aufweist, wobei insbesondere jede Reihe zumindest zwei voneinander beabstandete Leitereinrichtungen aufweisen kann.

Wenn die in benachbarten Reihen angeordneten Leiteinrichtungen in Richtung der Längsachse des Schleifleistenträgers versetzt zueinander angeordnet sind, ist eine gleichmäßige Verteilung der Leiteinrichtungen über die gesamte Kontaktfläche der Schleifleiste möglich.

Nachfolgend werden bevorzugte Ausführungsformen des Schleifstücks anhand der Zeichnung näher erläutert.

Es zeigen:
- **Fig.** 1: eine mit einem Schleifstück versehene Gleitkontakteinrichtung in isometrischer Darstellung;
- **Fig. 2**: ein erstes Ausführungsbeispiel eines entsprechend der Darstellung in **Fig. 1** als Bestandteil einer Gleitkontakteinrichtung ausgebildeten Schleifstücks in isometrischer Darstellung;
- **Fig. 3**: das in **Fig. 2** dargestellte Schleifstück in Schnittdarstellung gemäß Schnittlinienverlauf III-III in **Fig. 2****;**
- **Fig. 4**: ein entsprechend der Darstellung in **Fig. 1** als Bestandteil einer Gleitkontakteinrichtung ausgebildetes Schleifstück in einer zweiten Ausführungsform in isometrischer Darstellung;
- **Fig. 5**: eine Teildarstellung des in **Fig. 4** dargestellten Schleifstücks;
- **Fig. 6**: eine Seitenansicht des bei den Schleifstücken gemäß **Fig. 4** und **Fig. 5** verwendeten Schleifleistenträgers.

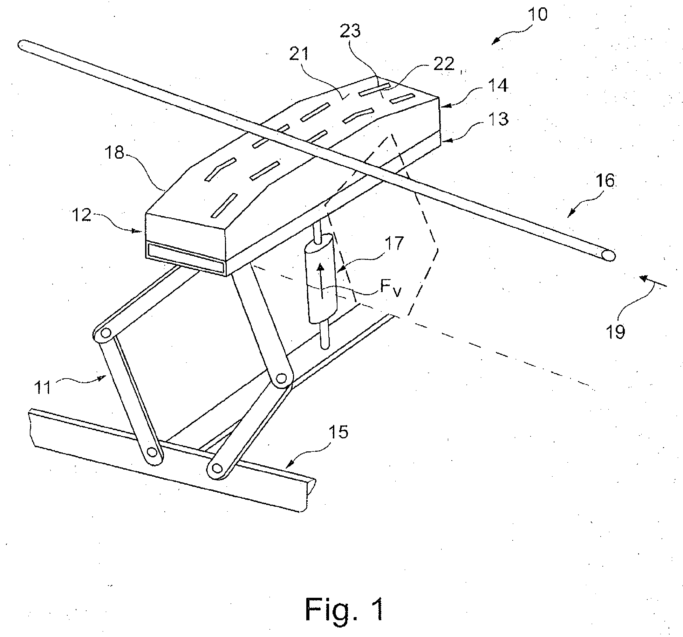

**Fig. 1** zeigt eine Gleitkontakteinrichtung 10 mit einem auf einer Gelenkeinrichtung 11 angeordneten Schleifstück 12. Das Schleifstück 12 weist zur Anordnung und Verbindung mit der Gelenkeinrichtung 11 einen Schleifleistenträger 13 auf, der mit einer Schleifleiste 14 bestückt ist. Die Gelenkeinrichtung 11 verbindet das Schleifstück 12 mit einer Montagebasis 15, die beispielsweise auf einem hier nicht näher dargestellten Triebwagen eines Schienenfahrzeugs angeordnet sein kann. Zur Erzeugung einer Vorspannkraft, mit der das Schleifstück 12 bzw. die Schleifleiste 14 federnd gegen einen oberhalb der Schleifleiste 14 längs geführten Fahrdraht 16 andrückbar ist, weist die Gleitkontakteinrichtung 10 eine hier als kombinierte Feder-/Dämpfereinrichtung ausgebildete Andruckeinrichtung 17 auf, die zwischen der Montagebasis 15 und dem Schleifleistenträger 13 wirksam ist.

Die in **Fig. 1** dargestellte Schleifleiste 14 besteht aus einem Kohlenstoff-Formkörper 18, der quer zu einer durch die Längserstreckung des Fahrdrahtes 16 definierten Gleitrichtung 19 und in Richtung einer durch die Andruckeinrichtung 17 auf die Schleifleiste 14 wirkenden Vorspannkraft F_{V} verlaufende und Schlitze 22 aufweist, die sich ausgehend vom Schleifleistenträger 13 durch den Kohlenstoff-Formkörper 18 bis in eine Kontaktfläche 21 der Schleifleiste 14 erstrecken. In den Schlitzen 22 erstreckt sich ebenfalls ausgehend vom Schleifleistenträger 13 bis in die Kontaktfläche 21 der Schleifleiste 14 jeweils eine Leiteinrichtung 23, die aus einem metallischen Material gebildet ist.

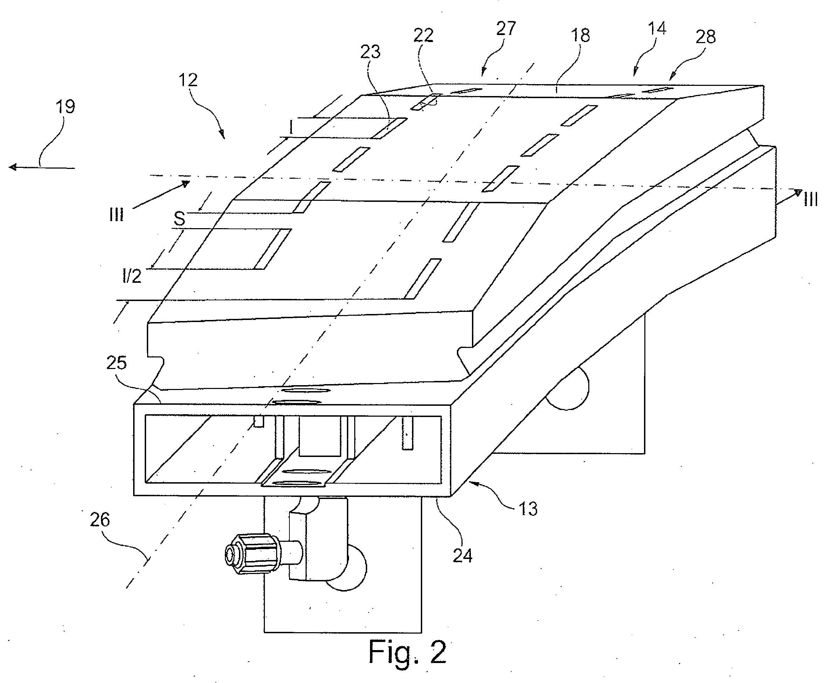

Wie insbesondere aus der **Fig. 2** zu ersehen ist, weist der Schleifleistenträger 13 ein Kastenprofil 24 auf, mit einer oberen Trägerfläche 25, auf der die Schleifleiste 14 angeordnet ist. Die Schleifleiste 14 besteht aus dem Kohlenstoff-Formkörper 18, in dem beidseitig einer mittigen Längsachse 26 die Schlitze 22 jeweils äquidistant mit einem Schlitzabstand s angeordnet sind. Dabei ist der Schlitzabstand s im vorliegenden Fall so gewählt, dass er kleiner ist, als die Schlitzlänge 1. Wie ferner Fig. 2 zu entnehmen ist, sind die Schlitze 22 jeweils in zwei Schlitzreihen 27, 28 zu beiden Seiten der Längsachse 26 und parallel zu dieser angeordnet. Dabei sind die Schlitzreihen 27, 28 in Richtung der Längsachse 26 um etwa die halbe Schlitzlänge 1/2 zueinander versetzt, so dass sich in Gleitrichtung 19 gesehen eine Überdeckung der Schlitzabstände s der Schlitzreihe 28 durch die Schlitze 22 der benachbarten Schlitzreihe 27 ergibt. Dies hat zur Folge, dass unabhängig - also auch abweichend - von einer in **Fig. 1** dargestellten Relativausrichtung des Fahrdrahtes 16 gegenüber der Kontaktfläche 21 der Schleifleiste 14 stets ein zuverlässiger, elektrisch leitfähiger Kontakt zwischen dem Fahrdraht 16 und zumindest einer der in den Schlitzen 22 der Schlitzreihen 27 und 28 angeordneten Leiteinrichtungen 23 einstellt.

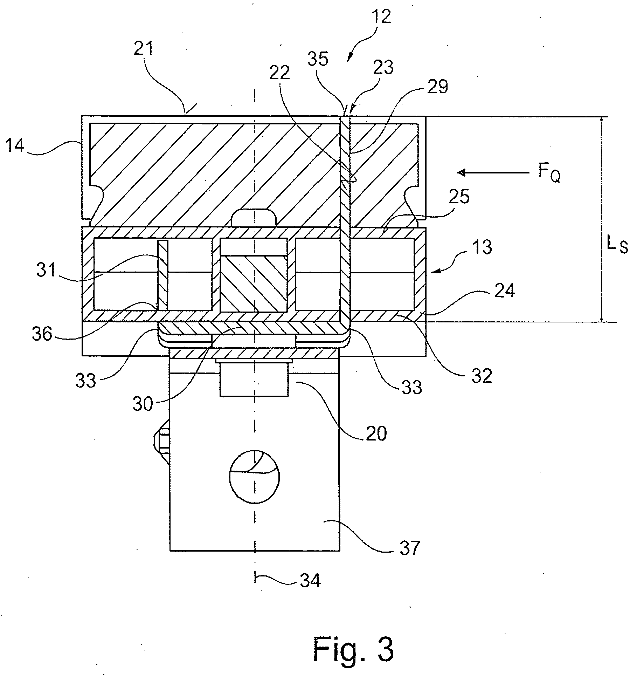

Wie **Fig. 3** zeigt, sind bei dem dargestellten Ausführungsbeispiel des Schleifstücks 12 die Leiteinrichtungen 23 vom Schleifleistenträger 13 unabhängig ausgebildet und sowohl form- als auch kraftschlüssig mit dem Kastenprofil 24 des Schleifleistenträgers 13 verbunden. Hierzu weisen bei dem dargestellten Ausführungsbeispiel die Leiteinrichtungen 23 jeweils einen Scheibenteil 29 auf, der über einen Montageanschlag 30 mit einem Eingriffsteil 31 verbunden ist. Dabei bilden die vorgenannten Teile eine im Wesentlichen U-förmige Relativanordnung aus. Zur Verbindung der Leiteinrichtungen 23 mit dem Kastenprofil 24 erstreckt sich der Scheibenteil 29 jeder Leiteinrichtung 23 durch sowohl in der Trägerfläche 25 als auch in einer Montagefläche 32 des Kastenprofils 24 ausgebildete Montageschlitze 32, 33 und den fluchtend hierzu angeordneten Schlitz 22 in der Schleifleiste 14 hindurch. Dabei ist die Länge L_{S} des Scheibenteils 29 so bemessen, dass bei einem Anschlag des Montageanschlags 30 gegen die Montagefläche 32 ein Kontaktrand 35 der Leiteinrichtung 23 bündig in der Kontaktfläche 21 der Schleifleiste 14 angeordnet ist. An dem gegenüberliegend zum Scheibenteil 29 angeordneten Rand des Montageanschlags 30 greift der Eingriffsteil 31 der Leiteinrichtung 23 in einen parallel zum Montageschlitz 33 in der Montagefläche 32 ausgebildeten Riegelschlitz 36 ein, so dass die Leiteinrichtung 23 positionssicher mit dem Kastenprofil 24 des Schleifleistenträgers 13 verbunden ist.

Durch den Montageanschlag 30 wird eine definierte vertikale Positionierung und durch den Eingriff des Scheibenteils 29 in Kombination mit dem Eingriffsteil 31 in das Kastenprofil 24 eine besonders genaue und sichere Drehwinkelpositionierung gegenüber einer vertikalen Achse 34 erreicht. Wie insbesondere aus der Darstellung in **Fig. 3** deutlich wird, ermöglicht die dargestellt den Kohlenstoff-Formkörper 18 durchdringende Anordnung des Scheibenteils 29 auch eine sichere Überleitung der infolge des Gleitkontakts zwischen dem Fahrdraht 16 und der Schleifleiste 14 auf die Schleifleiste 14 wirkenden Querkräfte F_{Q} in den Schleifleistenträger 13, so dass in der Grenzfläche zwischen der Schleifleiste 14 und der Trägerfläche 25 des Kastenprofils 24 im Wesentlichen keine Schubbeanspruchung entsteht.

Wie **Fig. 3** zeigt, ist es ausgehend von dem vorstehend erläuterten Formschluss zwischen dem Scheibenteil 29 und dem Eingriffsteil 31 mit dem Kastenprofil 24 des Schleifleistenträgers 13 zur Sicherung eines entsprechenden Kraftschlusses ausreichend, die in **Fig. 3** dargestellte, gegen die Montagefläche 32 des Kastenprofils 24 anliegende Relativposition des Montageanschlags 30 durch eine Schraubverbindung 20 zu sichern. Dabei bleibt die Schraubverbindung 20 selbst im Wesentlichen belastungsfrei. Gleichzeitig kann die Schraubverbindung 20 zum Anschluss eines Verbindungselements 37 dienen, zur Verbindung mit der in Fig. 1 dargestellten Gelenkeinrichtung 11.

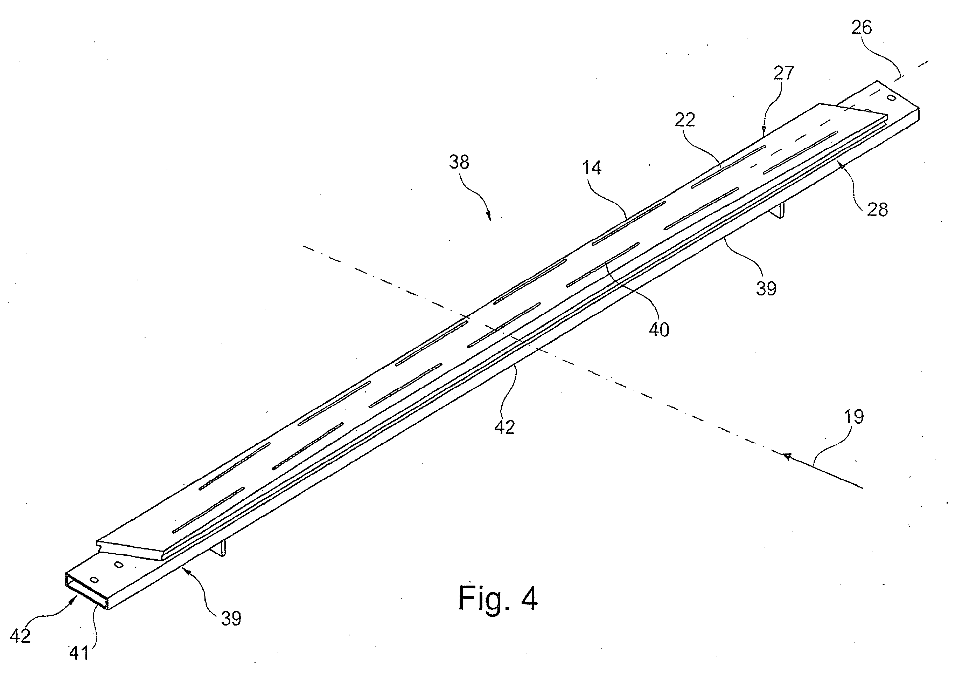

**Fig. 4** zeigt in einer weiteren Ausführungsform ein Schleifstück 38, das eine übereinstimmend mit der bereits zuvor bezugnehmend auf die **Fig. 1** bis **3** beschriebene Schleifleiste 14 aufweist, die in zwei zueinander und zur Längsachse 26 parallelen Schlitzreihen 27 und 28 mit Schlitzen 22 versehen ist.

Abweichend vom Schleifstück 12 weist das Schleifstück 38 einen Schleifleistenträger 39 auf, der mit Leiteinrichtungen 40 versehen ist, die einstückig mit einem einen Kastenprofilquerschnitt 41 aufweisenden Trägerprofil 42 des Schleifleistenträgers 39 verbunden sind.

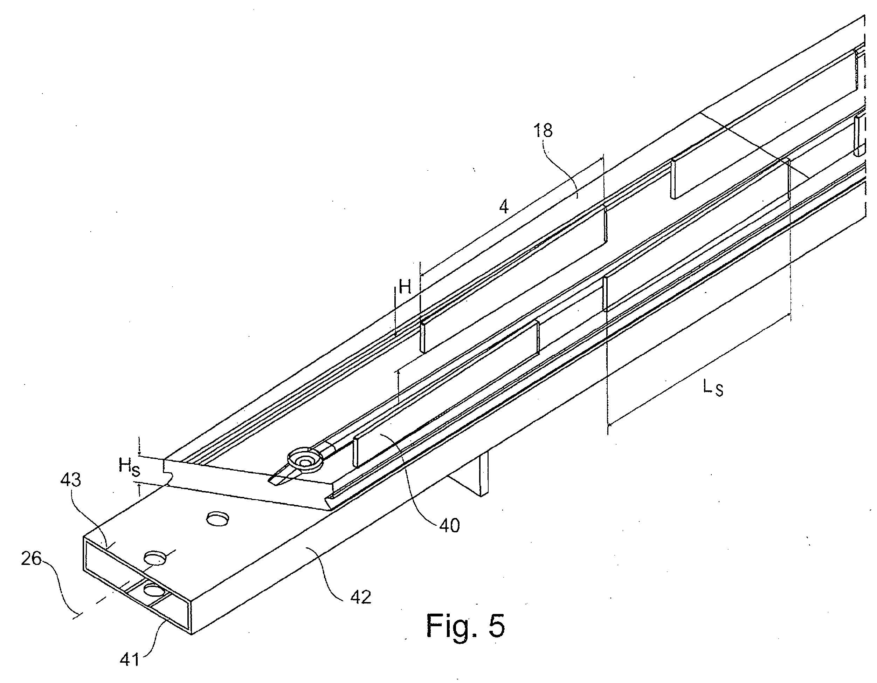

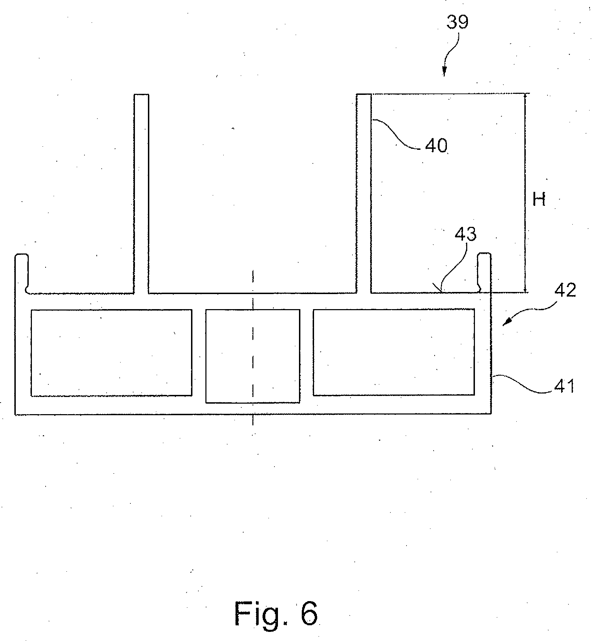

Hierzu weist das Trägerprofil 42, wie insbesondere den **Fig. 5** und **6** zu entnehmen ist, als Leiteinrichtungen 40 ausgebildete Profilstege auf, die an eine Trägerfläche 43 des hier als Kastenprofil ausgebildeten Trägerprofils 42 angeformt sind und eine Höhe H aufweisen, die der Höhe H_{S} der in dem Kohlenstoff-Formkörper 18 ausgebildeten Schlitze 22 entspricht. Weiterhin entsprechen die als Profilstege ausgebildeten Leiteinrichtungen 40 in ihrer Länge L in Richtung der Längsachse 26 der Schleifleite 14 der Länge L_{S} der Schlitze 22 und sind in ihrer Anordnung auf der Trägerfläche 43 des Trägerprofils 42 entsprechend den Schlitzreihen 27, 28 in der Schleifleiste ausgerichtet, so dass sich über die gesamte Länge der Schleifleiste 14 ein formschlüssiger Eingriff der Leiteinrichtungen 40 in die Schlitze 22 der Schleifleiste 14 ergibt.

Wie ein Vergleich der in den **Fig. 1** bis **3** und **4** bis **6** dargestellten beiden Ausführungsbeispiel der Erfindung zeigt, ist bei dem in den **Fig. 4** bis **6** dargestellten Schleifstück 38 eine mechanische Verbindung zwischen der Schleifleiste 14 und dem Schleifleistenträger 39 realisiert, die in gleicher Weise wie die ausführlich erläuterte mechanische Verbindung zwischen den Leiteinrichtungen 23 bzw. dem Scheibenteil 29 der Leiteinrichtungen 23 und der Schleifleiste 14 für die Ausbildung einer im Wesentlichen von einer Scher- oder Schubbeanspruchung freien Grenzfläche zwischen der Schleifleiste 14 und der Trägerfläche 43 des Schleifleistenträgers 39 sorgt.

## Patentansprüche

1. Schleifstück (12, 38) für eine mit Vorspannung gegen einen Fahrdraht (16) anliegende Gleitkontakteinrichtung (10), insbesondere zur Stromversorgung von Schienenfahrzeugen, mit einer auf einem Schleifleistenträger (13, 39) angeordneten Schleifleiste (14), die einen Kohlenstoff-Formkörper (18) und zumindest eine in dem Kohlenstoff-Formkörper angeordnete, metallische Leiteinrichtung (23, 40) zur Ausbildung einer lokal erhöhten Leitfähigkeit aufweist, wobei die Leiteinrichtung als zumindest eine sich in einer Ebene quer zu einer Gleitrichtung (19) und in Richtung einer Vorspannkraft erstreckende scheibenförmige Leiteinrichtung ausgebildet ist,
**dadurch gekennzeichnet,**
**dass** die Leiteinrichtung mit dem Schleifleistenträger derart verbunden ist, dass sie zur abscherfesten Anordnung des einstückig ausgeführten Kohlenstoff-Formkörpers auf dem Schleifleistenträger dient und sich in einem in dem einstückig ausgebildeten Kohlenstoff-Formkörper ausgebildeten Schlitz (22) bis zu einer Kontaktfläche (21) der Schleifleiste erstreckt.

2. Schleiflstück nach Anspruch 1,
**dadurchgekennzeichnet,**
dass die Leiteinrichtung (23) als ein mit dem Schleifleistenträger (13) kombinierbares Bauteil ausgebildet ist, das ein Verbindungsteil zur Verbindung mit dem Schleifleistenträger und einen Scheibenteil (29) zur Aufnahme in dem im Kohlenstoff-Formkörper (18) ausgebildeten Schlitz (22) aufweist.

3. Schleifstück nach Anspruch 2,
**dadurchgekennzeichnet,**
dass der Verbindungsteil einen parallel zu einer Unterseite des Schleifleistenträgers (13) verlaufenden und gegen die Unterseite anliegenden Montageanschlag (30) aufweist, und sich der daran anschließende Scheibenteil (29) durch einen Montageschlitz (33) im Schleifleistenträger in den im Kohlenstoff-Formkörper (18) ausgebildeten Schlitz (22) hinein erstreckt.

4. Schleifstück nach Anspruch 3,
**dadurch gekennzeichnet,**
**dass** der Verbindungsteil der Leiteinrichtung (23) einen parallel zum Scheibenteil (29) angeordneten und durch den Montageanschlag (30) vom Scheibenteil beabstandeten Eingriffsteil (31) zum verriegelnden Eingriff in einen auf der Unterseite des Schleifleistenträgers (13) ausgebildeten Riegelschlitz (36) aufweist.

5. Schleifstück nach Anspruch 3 oder 4,
**dadurch gekennzeichnet,**
**dass** zur Verbindung der Leiteinrichtung (23) mit dem Schleifleistenträger (13) der Montageanschlag (30) mit dem Schleifleistenträger verbunden ist.

6. Schleifstück nach einem der vorangehenden Ansprüche,
**dadurchgekennzeichnet,**
dass die Leiteinrichtung (23) und der Schleifleistenträger (13) aus unterschiedlichen Materialien gebildet sind.

7. Schleifstück nach Anspruch 6,
**dadurchgekennzeichnet,**
dass die Leiteinrichtung (23) aus Kupferblech besteht.

8. Schleifstück nach einem der vorangehenden Ansprüche,
**dadurchgekennzeichnet,**
dass der Schleifleistenträger (13) mit einer Mehrzahl von Leiteinrichtungen (23) versehen ist, derart, dass die Leiteinrichtungen entlang einer Längsachse (26) des Schleifleistenträgers in parallelen Reihen (27, 28) angeordnet sind, wobei jeweils die Scheibenteile von zwei aufeinanderfolgenden Leiteinrichtungen auf unterschiedlichen Seiten der Längsachse des Schleifleistenträgers angeordnet sind.

9. Schleifstück nach Anspruch 1,
**dadurchgekennzeichnet,**
dass die Leiteinrichtung (40) einstückig zusammenhängend am Schleifleistenträger (39) ausgebildet ist.

10. Schleifstück nach Anspruch 9,
**dadurchgekennzeichnet,**
dass die Leiteinrichtung (40) durch zumindest einen Profilsteg eines Trägerprofils (42) des Schleifleistenträgers (39) ausgebildet ist.

11. Schleifstück nach Anspruch 9 oder 10,
**dadurch gekennzeichnet,**
**dass** der Schleifleistenträger (39) eine Reihenanordnung von Leiteinrichtungen mit mehreren in zumindest zwei parallelen Reihen (27, 28) angeordneten Leiteinrichtungen (40) aufweist.

12. Schleifstück nach Anspruch 11,
**dadurch gekennzeichnet,**
**dass** jede Reihe (27, 28) zumindest zwei voneinander beabstandete Leiteinrichtungen (40) aufweist.

13. Schleifstück nach Anspruch 8 oder 12,
**dadurch gekennzeichnet,**
**dass** die in benachbarten Reihen angeordneten Leiteinrichtungen (23, 40) in Richtung der Längsachse (26) des Schleifleistenträgers (13, 39) versetzt zueinander angeordnet sind.

## Claims

1. A current collector strip (12, 38) for a sliding contact device (10) which bears in a prestressed fashion against a contact wire (16), in particular in order to supply current to rail vehicles, having a sliding strip (14) which is arranged on a sliding strip carrier (13, 39) and which has a carbon molding (18) and at least one metallic conducting device (23, 40) which is arranged in the carbon molding and has the purpose of bringing about locally increased conductivity, wherein the conducting device is formed as at least one disc-shaped conducting device which extends transversely to a sliding direction (19) and in the direction of a prestressing force in a plane
**characterized in that**
the conducting device is connected to the sliding strip carrier in such a way that said conducting device serves as the shear-resistant arrangement of the integrally formed carbon molding on the sliding strip carrier and extends in a slot (22), formed in the integrally formed carbon molding, as far as to a contact surface (21) of the sliding strip.

2. The current collector strip according to claim 1,
**characterized in that**
the conducting device (23) is embodied as a component which can be combined with the sliding strip carrier (13) and which has a connecting portion for the connection to the sliding strip carrier and a disc portion (29) for the mounting in the slot (22) formed in the carbon molding (18).

3. The current collector strip according to claim 2,
**characterized in that**
the connecting portion has a mounting stop (30) extending parallel to a lower side of the sliding strip carrier (13) and abutting against the lower side, and the disc portion (29) adjacent thereto extends through a mounting slot (33) in the sliding strip carrier into the slot (22) formed in the carbon molding (18).

4. The current collector strip according to claim 3,
**characterized in that**
the connecting portion of the conducting device (23) has an engagement portion (31) which is arranged parallel to the disc portion (29) and spaced from the disc portion by the mounting stop (30) and has the purpose of engaging in a locking manner a locking slot (36) formed on the lower side of the sliding strip carrier (13).

5. The current collector strip according to claim 3 or 4,
**characterized in that**
for the connection of the conducting device (23) to the sliding strip carrier (13), the mounting stop (30) is connected to the sliding strip carrier.

6. The current collector strip according to any of the preceding claims,
**characterized in that**
the conducting device (23) and the sliding strip carrier (13) are formed from different materials.

7. The current collector strip according to claim 6,
**characterized in that**
the conducting device (23) is made of sheet copper.

8. The current collector strip according to any of the preceding claims,
**characterized in that**
the sliding strip carrier (13) is provided with a multitude of conducting devices (23) in such a manner that the conducting devices are arranged along a longitudinal axis (26) of the sliding strip carrier in parallel lines (27, 28), wherein the disc portions of two consecutive conducting devices are arranged on different sides of the longitudinal axis of the sliding strip carrier, respectively.

9. The current collector strip according to claim 1,
**characterized in that**
the conducting device (40) is formed integrally connected on the sliding strip carrier (39).

10. The current collector strip according to claim 9,
**characterized in that**
the conducting device (40) is embodied by at least one profile web of a carrier profile (42) of the sliding strip carrier (39).

11. The current collector strip according to claim 9 or 10,
**characterized in that**
the sliding strip carrier (39) has an in-line arrangement of conducting devices with multiple conducting devices (40) arranged in at least two parallel lines (27, 28).

12. The current collector strip according to claim 11,
**characterized in that**
each line (27, 28) has at least two spaced-apart conducting devices (40).

13. The current collector strip according to claim 8 or 12,
**characterized in that**
the conducting devices (23, 40) arranged in neighboring lines are arranged offset to each other in the direction of the longitudinal axis (26) of the sliding strip carrier (13, 39).

## Revendications

1. Collecteur de courant (12, 38) pour un dispositif de contact glissant (10) joignant contre une caténaire (16) dans une manière précontrainte, en particulier pour l'alimentation électrique des véhicules ferroviaires, ayant une bande de frottement (14) disposée sur un support de bande de frottement (13, 39), ladite bande de frottement (14) comprenant un moulage carbone (18) et au moins un dispositif de conducteur (23, 40) métallique disposé dans le moulage carbone pour former une conductivité augmentée localement, dans lequel le dispositif de conducteur est formé comme au moins un dispositif de conducteur en forme de disque, qui étend transversale à un sens glissant (19) et dans un sens d'une force précontrainte,
**caractérisé en ce que**
le dispositif de conducteur est connecté avec le support de bande de frottement de telle manière qu'il sert comme une disposition, résistante à la traction, du moulage carbone formé intégralement sur le support de bande de frottement et s'étend dans une fente (22) dans le moulage carbone formé intégralement jusqu'une surface de contact (21) de la bande de frottement.

2. Collecteur de courant selon la revendication 1,
**caractérisé en ce que**
le dispositif de conducteur (23) est formé comme un component combinable avec le support de bande de frottement (13), ledit component comprenant une partie de connexion pour la connecter au support de bande de frottement et une partie de disque (29) pour la monter dans la fente (22) formée dans le moulage carbone (18).

3. Collecteur de courant selon la revendication 2,
**caractérisé en ce que**
la partie de connexion comprend un arrêt de montage (30) étendant parallèle à une face inférieure du support de bande de frottement (13) et contre la face inférieure adjacente et la partie de disque (29) y adjacente étend par une fente de montage (33) formée dans le support de bande de frottement dans la fente (22) formée dans le moulage de carbone (18).

4. Collecteur de courant selon la revendication 3,
**caractérisé en ce que**
la partie de connexion du dispositif de conducteur (23) comprend une partie d'engagement (31) disposée parallèle à la partie de disque (29) et espacée de la partie de disque par l'arrêt de montage (30) pour l'engagement verrouillant dans une fente de verrouillage (36) formée sur la face inférieure du support de bande de frottement (13).

5. Collecteur de courant selon la revendication 3 ou 4,
**caractérisé en ce que**
l'arrêt de montage (30) est connecté au support de bande de frottement pour connecter le dispositif de conducteur (23) au support de bande de frottement (13).

6. Collecteur de courant selon l'une quelconque des revendications,
**caractérisé en ce que**
le dispositif de conducteur (23) et le support de bande de frottement (13) sont formés de matériaux différents.

7. Collecteur de courant selon la revendication 6,
**caractérisé en ce que**
le dispositif de conducteur (23) est composé de la tôle de cuivre.

8. Collecteur de courant selon l'une quelconque des revendications,
**caractérisé en ce que**
le support de bande de frottement (13) est pourvu avec une pluralité des dispositifs de conducteur (23) de telle manière que les dispositifs de conducteur sont disposés travers un axe longitudinale (26) du support de bande de frottement en lignes parallèles (27, 28), dans lequel les parties de disque de deux dispositifs de conducteur successifs sont disposées aux cotés opposés de l'axe longitudinale du support de bande de frottement, respectivement.

9. Collecteur de courant selon la revendication 1,
**caractérisé en ce que**
le dispositif de conducteur (40) est formé intégralement d'une seule pièce au support de bande de frottement (39).

10. Collecteur de courant selon la revendication 9,
**caractérisé en ce que**
le dispositif de conducteur (40) est formé par au moins une semelle de profilé d'un profilé de support (42) du support de bande de frottement (39).

11. Collecteur de courant selon la revendication 9 ou 10,
**caractérisé en ce que**
le support de bande de frottement (39) comprend une disposition en ligne des dispositifs de conducteur ayant plusieurs dispositifs de conducteur (40) disposés en au moins deux lignes parallèles (27, 28).

12. Collecteur de courant selon la revendication 11,
**caractérisé en ce que**
chaque ligne (27, 28) comprend au moins deux dispositifs de conducteur (40) espacés l'un à l'autre.

13. Collecteur de courant selon la revendication 8 ou 12,
**caractérisé en ce que**
les dispositifs de conducteur (23, 40) en lignes adjacentes sont disposés déplacés un à l'autre au sens de l'axe longitudinale (26) du support de bande de frottement (13, 39).
